# EUROPÄISCHE PATENTANMELDUNG

(11) **EP 3 238 520 A1**
(43) Veröffentlichungstag der Anmeldung: **01.11.2017**
(21) Anmeldenummer: 17401038.9
(22) Anmeldetag: 31.03.2017
(51) Int. Cl.: A01C 7/04, A01C 7/08

(54) **SÄMASCHINE MIT VERBESSERTER ABLUFTFÜHRUNG**

(30) Priorität: 21.04.2016 DE 102016107381
(71) Anmelder: Amazonen-Werke H. Dreyer GmbH & Co. KG, 49205 Hasbergen (DE)
(72) Erfinder: Teckemeyer, Stephan, 49504 Lotte (DE)

(57) **Zusammenfassung**

Die Erfindung umfasst eine Dosiervorrichtung für granulares Material, insbesondere Saatgut, umfassend eine in einem Gehäuse (8) drehbar gelagerte Fördereinrichtung (17) zum Fördern von granularem Material von einem Aufnahmebereich in einen Abgabebereich, wobei im Abgabebereich eine Auslassöffnung angeordnet ist, über die ein durch die Fördereinrichtung (17) in den Abgabebereich gefördertes Korn des granularen Materials aus dem Gehäuse (8) ausgeschleust und an eine Abgabeeinrichtung weitergeleitet werden kann, und ein mit dem Gehäuse (8) verbundener Sammelbehälter (7) für granulares Material, der pneumatisch mit granularem Material befüllbar ist, wobei granulares Material aus dem Sammelbehälter (7) über einen Förderkanal in das Gehäuse (8) förderbar ist, wobei die Dosiervorrichtung so ausgebildet ist, dass die zum Befüllen des Sammelbehälters (7) genutzte Förderluft wenigstens teilweise in das Gehäuse (8) einleitbar ist.

## Beschreibung

Die Erfindung betrifft eine Dosiervorrichtung für granulares Material, insbesondere für Saatgut. Die Dosiervorrichtung umfasst ein Gehäuse, in dem drehbar gelagert eine Fördereinrichtung angeordnet ist, mit der granulares Material von einem Aufnahmebereich in einen Abgabebereich gefördert werden kann, in dem eine Auslassöffnung angeordnet ist. Über die Auslassöffnung kann ein Korn des granularen Materials aus dem Gehäuse ausgeschleust oder an eine Abgabeeinrichtung weitergeleitet werden. Mit dem Gehäuse ist ein Sammelbehälter verbunden, der pneumatisch mit granularem Material befüllbar ist. Über einen Förderkanal kann das granulare Material aus dem Sammelbehälter in das Gehäuse gefördert werden.

Dosiervorrichtungen in unterschiedlichster Art finden in landwirtschaftlichen Sämaschinen Anwendung zum Fördern und Dosieren von auf einer landwirtschaftlichen Fläche auszubringendem granularem Material. Die Dosiervorrichtungen arbeiten dabei häufig als Vereinzelungsaggregate, die zugeführtes granulares Material vereinzeln und dann in einem vorherbestimmten zeitlichen Abstand den Säscharen zur Ablage in den Boden zuführen. Dosiervorrichtungen dieser Art sind beispielsweise aus der EP 2 298 056 B1 und der EP 2 591 656 bekannt.

Manche Vereinzelungsaggregate weisen einen Sammelbehälter auf, der pneumatisch mit granularem Material befüllbar ist. Aus diesem Sammelbehälter wird dann granulares Material für die Vereinzelung entnommen. Dabei kann es zu einer gewissen Vordosierung kommen, also zu einer Einstellung der Menge an granularem Material, das dem eigentlichen Vereinzelungselement pro Zeiteinheit zugeführt wird.

Die zum Fördern des granularen Materials von einem zentralen Vorratsbehälter zum Sammelbehälter verwendete Förderluft wird in bekannten Systemen im Bereich des Sammelbehälters an die Umgebung abgegeben. Dies hat den Nachteil, dass mit Beizstäuben kontaminierte Förderabluft in die Umwelt gelangt und sich dort an Maschinenteilen festsetzt oder zu Atemwegsreizungen führt.

Aufgabe der Erfindung ist es daher, eine Dosiervorrichtung für granulares Material bereitzustellen, bei der die Kontamination der Umgebung durch mit Beizstäuben versetzter Förderabluft minimiert wird.

Diese Aufgabe wird durch eine Dosiervorrichtung gemäß Anspruch 1 gelöst. Weitere vorteilhafte Ausgestaltungen der Erfindung sind in den abhängigen Ansprüchen angegeben

Gemäß der Erfindung ist es also vorgesehen, dass die zum Befüllen des Sammelbehälters genutzte Förderluft wenigstens teilweise in das Gehäuse einleitbar ist, in der die drehbar gelagerte Fördereinrichtung granulares Material in einen Abgabebereich fördert. Die Förderabluft kann das Gehäuse dann nur über die Auslassöffnung verlassen, was eine gezieltere Abgabe der Förderabluft ermöglicht. Insbesondere kann die Förderabluft über einen mit der Auslassöffnung verbundenen Schusskanal in den Bereich eines Säschars geleitet werden, wo die Förderabluft bodennah abgegeben wird. Dadurch wird eine Kontamination der Umgebung weitestgehend vermieden oder wenigstens reduziert. Zusätzlich können Ablagerungen im Gehäuse mit der Förderabluft ausgeschleust werden. Durch das Einleiten der Förderabluft ins Gehäuse kann also auch eine reinigende Wirkung erzielt werden.

Die Förderluft kann insbesondere vollständig in das Gehäuse einleitbar sein.

Bei dem granularen Material kann es sich insbesondere um Saatgut handeln, alternativ oder zusätzlich jedoch auch um granulares Düngemittel oder granulares Pestizid. Das Saatgut kann insbesondere Saatgut für Getreide wie etwa Weizen, Roggen, Gerste, Hafer oder Raps sein.

Die Fördereinrichtung kann mit einer Gehäusewandung oder einem Führungselement so zusammenwirken, dass die Anzahl der geförderten Körner des granularen Materials vom Aufnahmebereich zum Abgabebereich hin abnimmt. Die Dosiervorrichtung kann insbesondere eine Vereinzelungsvorrichtung sein.

Zum Einleiten der Förderluft in das Gehäuse kann wenigstens ein Luftkanal vorgesehen sein, der getrennt von dem Förderkanal für das granulare Material ausgebildet ist. Dies kann insbesondere bei Lösungen realisiert werden, bei denen eine Vordosierung vorgesehen ist, welche ansonsten eine Luftströmung vom Sammelbehälter in das Gehäuse unterbindet.

In einer Wandung des Sammelbehälters kann wenigstens eine Luftauslassöffnung vorgesehen sein, die durch einen Puffer von granularem Material wenigstens teilweise blockierbar ist, wobei die wenigstens eine Luftauslassöffnung in das Gehäuse oder in einen umgebenden Abluftsammelraum mündet.

Der Sammelbehälter und das Gehäuse können also wenigstens bereichsweise eine gemeinsame Wandung aufweisen, in der wenigstens eine Luftauslassöffnung vorgesehen ist. Die Luft strömt dann unmittelbar oder direkt aus dem Sammelbehälter in das Gehäuse.

Es ist auch denkbar, dass die Wand des Sammelbehälters, in der die wenigstens eine Luftauslassöffnung vorgesehen ist, unmittelbar an eine Wand des Gehäuses angrenzt, in der eine entsprechende Bohrung oder Öffnung vorgesehen ist, welche die wenigstens eine Luftauslassöffnung des Sammelbehälters zum Inneren des Gehäuses hin verlängert. Die Luft strömt dann über die wenigstens eine Luftauslassöffnung des Sammelbehälters und die wenigstens eine Bohrung oder Öffnung in der Gehäusewand in das Gehäuse.

Gemäß der Alternative eines Abluftsammelraums, kann die Förderluft zunächst über die wenigstens eine Luftauslassöffnung in den Abluftsammelraum gelangen, von wo aus es über wenigstens einen Luftkanal, der getrennt von dem Förderkanal für das granulare Material ausgebildet ist, in das Gehäuse einleitbar ist.

Der Abluftsammelraum kann insbesondere ein gegenüber der Umgebung abgeschlossener Bereich bzw. Volumen sein. Förderluft, die über die wenigstens eine Luftauslassöffnung in den Abluftsammelraum gelangt, kann also nur über den oben genannten Luftkanal in das Innere des Gehäuses entweichen.

Die oben erwähnte wenigstens eine Luftauslassöffnung kann eine Durchlassöffnung oder Durchlassbohrung sein. Es können insbesondere mehrere Luftauslassöffnungen vorgesehen sein, insbesondere zwei oder mehr Luftauslassöffnungen. Es ist auch denkbar, mehrere Luftauslassöffnungen in Form eines Luftauslassgitters oder Luftauslasssiebs vorzusehen. Die Luftauslassöffnungen des Luftauslassgitters oder des Luftauslasssiebs können insbesondere in regelmäßigen Abständen angeordnet sein. Insbesondere können dadurch mehrere Reihen und Spalten von Luftauslassöffnungen gebildet werden.

Die Größe, insbesondere der Durchmesser, der wenigstens einen Luftauslassöffnung kann an die Größe der Körner des granularen Materials angepasst sein. Insbesondere kann die Größe, insbesondere der Durchmesser, der wenigstens einen Luftauslassöffnung kleiner sein als die mittlere Ausdehnung eines Korns des granularen Materials.

Die wenigstens eine Luftauslassöffnung kann kreisförmig sein. In diesem Fall entspricht die Größe der Luftauslassöffnung deren Durchmesser. Andere Geometrien sind jedoch ebenfalls möglich. In diesem Fall kann die größte Ausdehnung der Luftauslassöffnung als deren Größe verwendet werden.

Die Dosiervorrichtung, insbesondere der Sammelbehälter, kann über ein Nursingsystem oder über einen Verteilkopf mit granularem Material gespeist werden. Als Nursingsystem kann ein Nachfüllsystem bezeichnet werden, welches einen zentralen Vorratsbehälter zum Vorhalten des granularen Materials umfasst, der über einen pneumatischen Förderkanal direkt oder unmittelbar mit der Dosiervorrichtung verbunden ist. Bei einem Nursingsystem wird also kein Verteilerkopf verwendet. Auch der in Zusammenhang mit dem Verteilerkopf eingesetzte Zentraldosierer kann bei einem Nursingsystem eingespart werden.

Es ist jedoch auch möglich, einen volumetrischen Zentraldosierer mit nachgeschaltetem Verteilerkopf zu verwenden, um die Dosiervorrichtung mit granularem Material zu speisen.

Die Dosiervorrichtung, insbesondere die Fördereinrichtung, kann einen Zentrierschieber umfassen, der granulares Material entlang einer Führungsfläche eines Führungselements vom Aufnahmebereich in den Abgabebereich schiebt und dabei ein Korn zentriert, indem er es beidseitig abstützt oder führt. Nicht zentrierte Körner, die im Aufnahmebereich aufgenommen und entlang der Führungsfläche transportiert werden, können infolge ausgesondert werden, sodass im Abgabebereich das zentrierte Korn verbleibt und an ein Abgabeelement zur Ablage auf einer landwirtschaftlichen Fläche weitergeleitet werden kann. Insbesondere kann genau ein Korn durch den Zentrierschieber zentriert geführt werden. Die Dosiervorrichtung kann also eine Vereinzelungsvorrichtung sein.

Die Angabe "beidseitig abstützt oder führt" bedeutet, dass der Zentrierschieber Elemente umfasst, welche das zentrierte Korn an beiden Seiten (auf die Drehrichtung des Zentrierschiebers bezogen) abstützen oder führen. Damit kann eine Bewegung des Korns quer zur Drehrichtung reduziert oder vermieden werden, sodass das zentrierte Korn im Wesentlichen entlang einer vorbestimmten Bewegungsbahn vom Aufnahmebereich in den Abgabebereich geschoben wird. Um das Korn seitlich zu führen ist es nicht erforderlich, dass der Zentrierschieber stets in direktem Kontakt mit dem Korn steht. Es ist ausreichend, wenn der Zentrierschieber verhindert, dass das Korn einen vorherbestimmten seitlich begrenzten Bereich verlässt.

Als Drehrichtung wird die Bewegungsrichtung bezeichnet, in der sich der Zentrierschieber im Betrieb der Dosiervorrichtung bewegt. Mit anderen Worten bezeichnet die Drehrichtung die Richtung der Vorwärtsbewegung des Zentrierschiebers. Wenn sich der Zentrierschieber entlang einer Kreisbahn bewegt, ist die Bewegungsrichtung an jedem Punkt der Kreisbahn tangential zu dieser. Die Angaben "seitlich" oder "beidseitig" beziehen sich daher auf die Bereiche quer zur Drehrichtung.

Die Angabe "wenigstens teilweise" bedeutet in diesem Zusammenhang, dass der Zentrierschieber das Korn nicht durchgehend vom Aufnahmebereich bis zum Abgabebereich beidseitig abstützen oder führen muss. Beispielsweise kann es Zeit in Anspruch nehmen, bis sich das Korn so relativ zum Zentrierschieber ausgerichtet hat, dass eine beidseitige Abstützung oder Führung möglich ist. Während dieser Zeit kann das Korn bereits einen gewissen Weg vom Aufnahmebereich zum Abgabebereich bewegt werden. Das Korn kann aber auch entlang des gesamten Wegs beidseitig abgestützt oder geführt werden.

Der Zentrierschieber kann auch ein oder mehrere Elemente umfassen, welche das zentrierte Korn in Drehrichtung gesehen nach hinten abstützen. Die Elemente, welche die seitliche Abstützung oder Führung bewirken können zugleich auch die Abstützung nach hinten gewährleisten.

Der Zentrierschieber kann so drehbar in dem Gehäuse gelagert sein, dass er entlang einer Kreisbahn bewegbar ist, wobei das Führungselement wenigstens teilweise entlang der Kreisbahn verläuft, und wobei die Breite der Führungsfläche vom Aufnahmebereich zum Abgabebereich hin abnimmt.

Durch die abnehmende Breite der Führungsfläche können die Körner, welche nicht durch den Zentrierschieber zentriert werden, im Laufe der Bewegung vom Aufnahmebereich in den Abgabebereich aufgrund der wegfallenden Stütze durch die Führungsfläche unter Zentrifugalkrafteinflüssen und/oder Schwerkrafteinflüssen ausgesondert werden. Diese können zur erneuten Förderung in den Aufnahmebereich zurückgeführt werden, insbesondere durch Trägheit und/oder unter Schwerkrafteinfluss. Auch die Breite des Führungselements insgesamt kann vom Aufnahmebereich zum Abgabebereich hin abnehmen.

Ausgesonderte Körner können auch über einen Rückkanal in den Sammelbehälter zurückgefördert werden.

Der Zentrierschieber kann so im Gehäuse gelagert sein, dass die Kreisbahn im Betrieb der Dosiervorrichtung im Wesentlichen vertikal verläuft. Mit anderen Worten kann die Drehachse, um die der Zentrierschieber rotiert, horizontal verlaufen, insbesondere im Betrieb parallel zum zu bearbeitenden Boden. Insbesondere kann die Drehachse mit der Horizontalen einen Winkel zwischen 0° und 10°, insbesondere zwischen 0° und 5°, einschließen.

Das Führungselement kann insbesondere radial außerhalb der Kreisbahn verlaufen. Mit anderen Worten kann das Führungselement die Kreisbahn wenigstens teilweise radial umgeben oder begrenzen. Das Führungselement kann insbesondere annähernd tangential entlang bestimmten Abschnitten der Kreisbahn verlaufen, insbesondere im Abschnitt der Kreisbahn zwischen dem Aufnahmebereich und dem Abgabebereich.

Die Kreisbahn kann insbesondere durch ein äußerstes Ende oder eine Spitze des Zentrierschiebers überstrichen werden. Mit anderen Worten kann die Kreisbahn einen Radius aufweisen, der der Länge des Zentrierschiebers entspricht. Die Länge des Zentrierschiebers kann der maximalen radialen Erstreckung des Zentrierschiebers ausgehend von der Drehachse entsprechen.

Der Aufnahmebereich kann ein bestimmtes Kreissegment der Kreisbahn des Zentrierschiebers umfassen.

Im Abgabebereich kann die Stützwirkung des Führungselementes entfallen oder der Verlauf des Führungselementes sich derart ändern, dass das wenigstens eine Korn durch Fliehkraft in die Auslassöffnung gefördert wird.

Als Führungsfläche des Führungselements wird hierin die für die Förderung des granularen Materials vom Aufnahmebereich in den Abgabebereich wirksame Fläche des Führungselements bezeichnet. Mit anderen Worten entspricht die Führungsfläche des Führungselements der Oberfläche des Führungselements, auf der Körner des granularen Materials bei der Förderung von dem Aufnahmebereich in den Abgabebereich hin bewegt werden. Aufgrund der Bewegung entlang der Kreisbahn wird das granulare Material durch Fliehkraft gegen die Führungsfläche des Führungselements gedrückt. Die Führungsfläche des Führungselements dient daher als Stütze für das granulare Material entgegen der Fliehkraft. Alternativ oder zusätzlich können die Körner auch durch die Schwerkraft gegen die Führungsfläche gedrückt werden. Dies kann insbesondere dann der Fall sein, wenn sich der Zentrierschieber gemäß einer Alternative nicht entlang einer Kreisbahn um die Drehachse bewegt, sondern entlang einer Bahn, die wenigstens teilweise parallel zur Horizontalen verläuft.

Wenn die Breite der Führungsfläche abnimmt geht diese Stützwirkung, wie oben erwähnt, für bestimmte Körner des granularen Materials verloren, weshalb diese nicht weiter zum Abgabebereich hin gefördert werden können, sondern ausgesondert werden.

Die Breite der Führungsfläche kann vom Aufnahmebereich zum Abgabebereich hin kontinuierlich abnehmen. Dadurch können überschüssige Körner sukzessive ausgesondert werden. Diese werden dann sukzessive an den Aufnahmebereich zurückgeführt, sodass ein ausreichendes Reservoir von granularem Material im Aufnahmebereich bereitgestellt werden kann, selbst wenn über die Zufuhrleitung temporär zu wenig granulares Material zugeführt wird. Die Breite der Führungsfläche kann jedoch auch diskontinuierlich abnehmen.

Als Breite der Führungsfläche kann insbesondere die Ausdehnung der Führungsfläche quer zur Kreisbahn bezeichnet werden. Die Richtung quer zur Kreisbahn bezeichnet hierin eine Richtung, die an jedem Punkt der Kreisbahn senkrecht zur Tangente und senkrecht zum Radius der Kreisbahn verläuft. Die Ausdehnung der Führungsfläche in dieser Richtung wird entlang der, gegebenenfalls konturierten, Führungsfläche bestimmt.

Das Führungselement kann eine Vertiefung aufweisen, in die der Zentrierschieber wenigstens teilweise eingreift, wobei die Tiefe der Vertiefung entlang der Kreisbahn des Vereinzelungsschiebers vom Aufnahmebereich zum Abgabebereich hin abnimmt. Durch die Vertiefung im Aufnahmebereich ist es möglich, dass zuverlässig Saatgut durch den Zentrierschieber aufgenommen und entlang der Führungsfläche bewegt werden kann. Durch die abnehmende Tiefe der Vertiefung entlang der Kreisbahn kann wiederum eine Aussonderung überschüssiger Körner des granularen Materials bewirkt werden. Die Abnahme der Tiefe geht mit einer Abnahme der Breite der Führungsfläche einher.

Die Vertiefung im Führungselement kann insbesondere einer Nut oder Kerbe entsprechen. Die Nut oder Kerbe kann insbesondere V-förmig ausgebildet sein.

Das Führungselement kann im Abgabebereich einen in Drehrichtung verlaufenden Grat aufweisen. Durch einen solchen Grat wird eine Vereinzelung des granularen Materials weiter gefördert, da entlang des Grats üblicherweise nur ein Korn stabil bewegt werden kann, nämlich das Korn, welches wenigstens teilweise durch den Zentrierschieber zentriert wird. Die vorherbestimmte Bahn entlang der Führungsfläche, entlang der der Zentrierschieber ein Korn zentriert bewegt, kann insbesondere entlang des Grats verlaufen.

Beidseitig des Führungselements kann ein Sammelraum für im Laufe des Transports vom Aufnahmebereich zum Abgabebereich ausgesonderte Körner des granularen Materials angeordnet sein, der mit dem Aufnahmebereich verbunden ist. Dadurch können ausgesonderte Körner wieder für den erneuten Transport vom Aufnahmebereich in den Abgabebereich bereitgestellt werden. Der Sammelraum kann durch die Wandung des Gehäuses begrenzt werden.

Das Führungselement kann an einer Innenfläche des Gehäuses angeordnet sein, welche den Raum, in dem der Zentrierschieber im Betrieb rotiert, radial begrenzt. Mit anderen Worten kann das Gehäuse im Wesentlichen zylindrisch ausgebildet sein, wobei das Führungselement an der Mantelfläche des Gehäuses angeordnet ist.

Das Führungselement kann Teil der Innenfläche des Gehäuses sein. Alternativ kann das Führungselement zerstörungsfrei lösbar oder nicht zerstörungsfrei lösbar mit der Innenfläche des Gehäuses verbunden sein. Beispielsweise kann das Führungselement an das Gehäuse angeschweißt sein.

Das Führungselement und der Zentrierschieber können in einer gemeinsamen Ebene angeordnet sein, wobei das Führungselement und der Zentrierschieber bezüglich dieser Ebene symmetrisch ausgebildet sind. Die gemeinsame Ebene kann insbesondere eine Rotationsebene des Zentrierschiebers sein.

Falls das Führungselement eine Vertiefung aufweist, können die Punkte mit der größten Tiefe in der gemeinsamen Ebene liegen.

Falls das Führungselement einen Grat aufweist, kann dieser ebenfalls in der gemeinsamen Ebene liegen.

Die Dosiervorrichtung kann wenigstens einen weiteren Zentrierschieber umfassen. Dieser kann eines oder mehrere Merkmale des oben genannten Zentrierschiebers aufweisen. Insbesondere kann der wenigstens eine weitere Zentrierschieber so drehbar im Gehäuse gelagert sein, dass er entlang der Kreisbahn bewegbar ist. Mit anderen Worten kann der weitere Zentrierschieber in Umfangsrichtung versetzt zum oben beschriebenen Zentrierschieber angeordnet sein und dem oben beschriebenen Zentrierschieber nachlaufend entlang der Kreisbahn bewegbar sein.

Der Zentrierschieber und der wenigstens eine weitere Zentrierschieber können miteinander verbunden sein, insbesondere starr miteinander verbunden sein.

Der Zentrierschieber und der wenigstens eine weitere Zentrierschieber können an einer gemeinsamen rotierenden Scheibe oder einem gemeinsam rotierenden Ring angeordnet sein.

Der Zentrierschieber und der wenigstens eine weitere Zentrierschieber können ein die Zentrierwirkung des Zentrierschiebers erzeugendes Element aufweisen. Dieses Element kann insbesondere so ausgebildet sein, dass ein Korn des granularen Materials beidseitig stützbar oder führbar ist. Das Element kann nach vorne hin (in Drehrichtung) offen sein. Mit anderen Worten kann eine Abstützung des Korns nach vorne hin unterbleiben.

Der Zentrierschieber kann insbesondere eine in Drehrichtung offene Nut oder Kerbe zur Aufnahme eines Korn des granularen Materials umfassen. Die Nut oder Kerbe kann auch in Richtung der Führungsfläche offen sein. Die Größe der Nut kann so gewählt sein, dass sich maximal ein Korn ganz oder teilweise in der Nut anordnen kann.

Die Nut kann insbesondere konisch oder V-förmig ausgebildet sein. Die Nut kann insbesondere bezüglich der oben genannten gemeinsamen Ebene des Führungselements und des Zentrierschiebers symmetrisch ausgebildet sein. Eine korrespondierende Vertiefung im Führungselement kann ebenfalls symmetrisch bezüglich dieser Ebene ausgebildet sein. Diese Symmetrie erlaubt insbesondere ein beidseitiges Absondern von überschüssigen Körnern in den umgebenden Sammelraum.

In einer alternativen Ausführungsform kann der Zentrierschieber mehrere in Richtung des Führungselements weisende Borsten aufweisen. Wenn die Breite der Führungsfläche zum Abgabebereich hin abnimmt, werden äußere Borsten nicht mehr entlang der Führungsfläche bewegt und können sich infolge der Fliehkraftwirkung aufstellen. Damit können diese Borsten ein Korn des granularen Materials seitlich führen. Nachlaufende Borsten können das Korn in Drehrichtung gesehen nach hinten abstützen. Mit anderen Worten kann sich auch bei einem Borsten umfassenden Zentrierschieber eine konische oder V-förmige Zentrierfläche für ein Korn ausbilden.

Das die Zentrierwirkung des Zentrierschiebers erzeugende Element des Zentrierschiebers kann insbesondere am äußersten Ende oder an der Spitze des Zentrierschiebers angeordnet sein.

Das Zentrierelement kann austauschbar sein. Beispielsweise kann eine die oben genannte Nut des Zentrierschiebers umfassende Spitze des Zentrierschiebers auswechselbar sein. Dadurch kann eine gewisse Anpassung oder Optimierung hinsichtlich der Korngrößen erzielt werden.

Alternativ zur beschriebenen Ausbildungsform unter Verwendung von Zentrierschiebern kann die Dosiervorrichtung auch wie in der DE 10 2012 105 048 A1 beschrieben ausgebildet sein. An die drehbar gelagerte Fördereinrichtung kann also annähernd tangential eine Innenmantelfläche des Gehäuses anschließen. Die Fördereinrichtung kann mit Taschen zusammenwirken, in denen Körner des granularen Materials gedrängt und kreisförmig befördert werden, bis in einem vorherbestimmten Gehäusebereich durch eine veränderte Kontur der Innenmantelfläche des Gehäuses und unter Zentrifugalkrafteinflüssen nur jeweils ein einzelnes Korn in der Tasche verbleibt, während überschüssige Körner abgesondert und zur erneuten Förderung in einen ersten Gehäusebereich zurückgeführt werden.

Die Erfindung stellt außerdem ein Nachfüllsystem für granulares Material bereit, umfassend einen zentralen Vorratsbehälter zum Vorhalten des granularen Materials, eine oben beschriebene Dosiervorrichtung und einen pneumatischen Förderkanal zum pneumatischen Fördern von granularem Material vom Vorratsbehälter zur Dosiervorrichtung.

Die Dosiervorrichtung kann eines oder mehrere der oben genannten Merkmale aufweisen. Der pneumatische Förderkanal kann mit einem Gebläse verbunden sein, welches die Förderluft im pneumatischen Förderkanal bereitstellt.

Die Erfindung stellt außerdem eine Sämaschine bereit umfassend eine oben beschriebene Dosiervorrichtung oder ein oben beschriebenes Nachfüllsystem.

Weitere Merkmale und Vorteile der Erfindung werden nachfolgend anhand der beispielhaften Figuren erläutert. Dabei zeigt:
- Fig. 1: den schematischen Aufbau eines beispielhaften Nachfüllsystems umfassend eine beispielhafte Dosiervorrichtung;
- Fig. 2: eine perspektivische Ansicht einer beispielhaften Dosiervorrichtung; und
- Fig. 3: eine Querschnittsdarstellung durch Teile der beispielhaften Dosiervorrichtung nach Fig. 2.

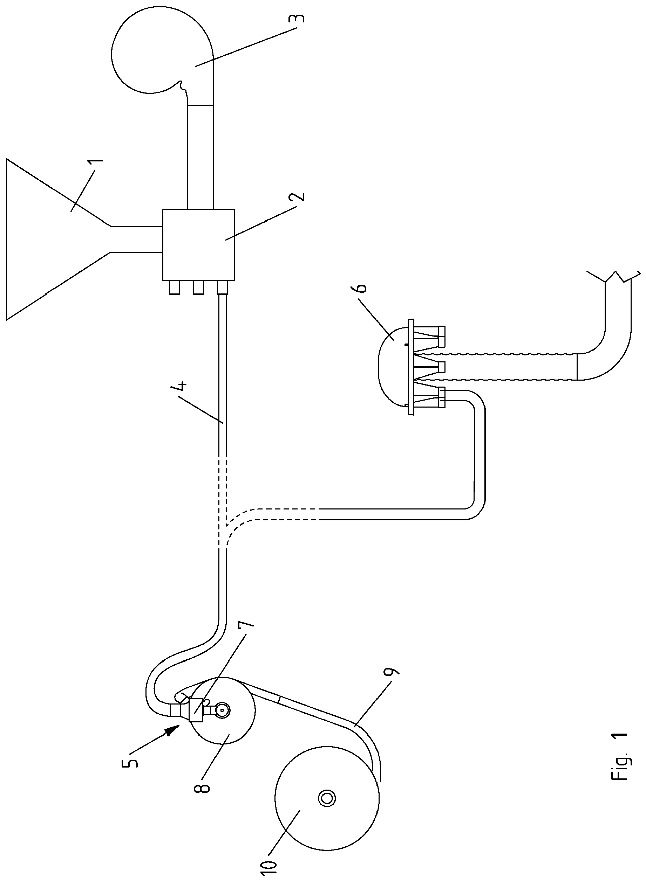

Fig. 1 zeigt schematisch den Aufbau eines beispielhaften Nachfüllsystems, wie es in einer Sämaschine Anwendung finden kann. Dabei zeigt Fig. 1 insbesondere zwei alternative Beispiele für die Beschickung der verwendeten Dosiervorrichtung mit granularem Material.

Gemäß einer Alternative ist ein sogenanntes Nursingsystem vorgesehen. Das Nursingsystem umfasst einen zentralen Vorratsbehälter 1 zum Vorhalten des granularen Materials sowie einen pneumatischen Förderkanal 4 zum pneumatischen Fördern von granularem Material vom Vorratsbehälter 1 zur Dosiervorrichtung 5, insbesondere zu dessen Sammelbehälter 7. Die Dosiervorrichtung 5 ist also direkt oder unmittelbar mit dem Vorratsbehälter 1 verbunden, insbesondere mit einer sogenannten Nursingkammer 2, welche Teil des zentralen Vorratsbehälters 1 ist, und aus der das granulare Material in den pneumatischen Förderkanal 4 überführt werden kann. Das Nursingsystem umfasst außerdem ein Gebläse 3, um den pneumatischen Förderkanal 4 mit einem Überdruck zu beaufschlagen. Die Luft aus dem Gebläse 3 wird über die Nursingkammer 2 geleitet. Dadurch wird granulares Material aus der Nursingkammer 2 in den Förderluftstrom verbracht und in den pneumatischen Förderkanal 4 gemeinsam mit der Förderluft geleitet.

Die Verwendung eines Nursingsystems ist insofern vorteilhaft, da ein Nursingsystem einfach im Aufbau ist und separate Komponenten, wie etwa ein Verteilkopf, eingespart werden können.

Gemäß einer in der Fig. 1 dargestellten Alternative kann die Dosiervorrichtung 5, insbesondere der Sammelbehälter 7, jedoch auch über einen Vorratsbehälter mit verbundenem Zentraldosierer (nicht dargestellt) und einen nachgeschalteten Verteilkopf 6 mit granularem Material gespeist werden. Auch die Förderung von granularem Material vom Verteilkopf 6 zum Sammelbehälter 7 der Dosiervorrichtung 5 hängt von der Förderluftströmung in der Zuführleitung 4 ab, welche den Sammelbehälter 7 mit dem Verteilkopf 6 verbindet.

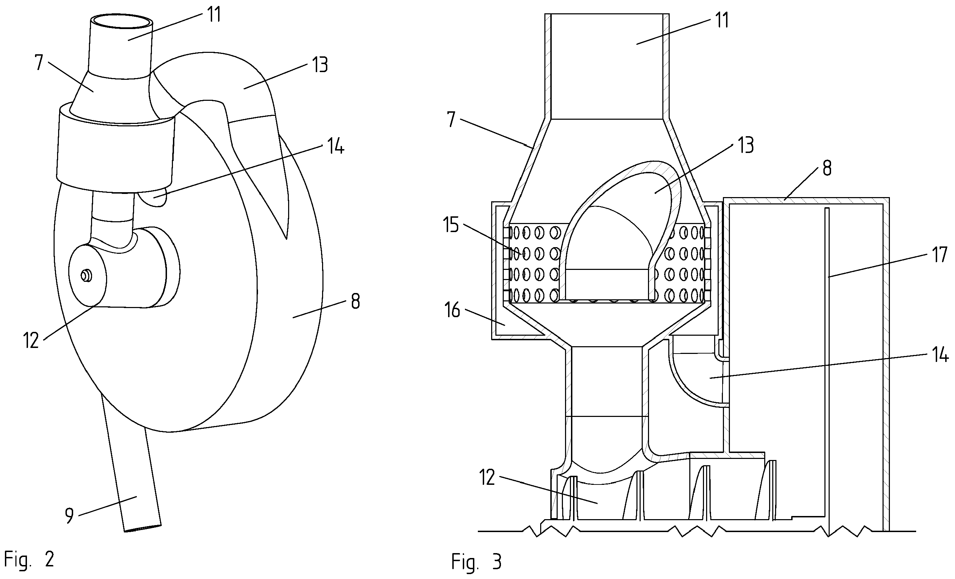

Fig. 2 zeigt perspektivisch die beispielhafte Dosiervorrichtung, die im Nachfüllsystem der Fig. 1 Anwendung findet. Diese umfasst ein Gehäuse 8, in dem eine hier nicht gezeigte Fördereinrichtung drehbar gelagert ist, um granulares Material von einem Aufnahmebereich in einen Abgabebereich zu fördern. Die Fördereinrichtung kann dabei so ausgebildet sein, dass das granulare Material beim Fördern vom Aufnahmebereich in den Abgabebereich vereinzelt wird, im Abgabebereich also pro vorab definierter Zeiteinheit ein Korn bereitgestellt wird, das über eine Auslassöffnung an eine Abgabeeinrichtung, insbesondere ein Säschar, weitergeleitet wird. Wie auch in Fig. 1 dargestellt, ist dafür ein Schusskanal 9 vorgesehen, welcher die vereinzelten Körner zum Säschar 10 fördert. Das Säschar 10 ist im Beispiel der Fig. 1 als Scheibenschar ausgebildet. Es wäre aber auch möglich, hier einen Säzinken vorzusehen.

Körner welche während des Vereinzelungsprozesses aussortiert werden, können über einen Rückkanal 13 wiederum in den Sammelbehälter 7 verbracht werden. Vom Sammelbehälter 7 aus gelangt granulares Material über die axiale Vordosierung 12 in das Gehäuse 8. Die Vordosierung 12 kann beispielsweise einen hier nicht gezeigten Schneckenförderer umfassen.

Der Sammelbehälter 7 wird pneumatisch über den in Fig. 1 gezeigten Förderkanal 4 mit granularem Material befüllt, welcher im Bereich 11 in den Sammelbehälter 7 einmündet.

Ebenfalls in Fig. 2 ersichtlich ist ein separater Luftkanal 14, über den die zum Befüllen des Sammelbehälters 7 genutzte Förderluft in das Gehäuse 8 einleitbar ist. Im Betrieb der Dosiervorrichtung strömt die Förderluft also über den Luftkanal 14 in das Gehäuse 8 und wird nicht im Bereich des Sammelbehälters 7 unmittelbar an die Umgebung abgegeben. Die Förderluft gelangt dann über das Innere des Gehäuses 8 in den Schusskanal 9 und damit in den Bereich des in Fig. 2 nicht mehr gezeigten Säschars 10. Dort wird die Förderluft dann bodennah an die Umgebung abgegeben. Dies reduziert die Kontamination der Umgebungsluft mit beizstaubbelasteter Förderabluft.

Fig. 3 zeigt einen Querschnitt durch die beispielhafte Dosiervorrichtung der Fig. 2. Zu sehen ist darin insbesondere eine Vielzahl von Luftauslassöffnungen 15, die in einer Wandung des Sammelbehälters 7 angeordnet sind. Diese Luftauslassöffnungen 15 bilden ein Luftauslasssieb oder Luftauslassgitter und sind in einem Bereich der Wandung angeordnet, der den eigentlichen Sammelraum für einen Körnerpuffer umgibt. Je nach Befüllungsstand des Körnerpuffers decken die Körner mehr oder weniger der Luftauslassöffnungen 15 ab. Dies wiederum verändert den Strömungswiderstand der Luftströmung im Förderkanal 4 und damit den Volumenstrom von granularem Material, der dem Sammelbehälter 7 zugeführt wird. Ist der Puffer gefüllt und werden die Luftauslassöffnungen 15 daher im Wesentlichen vollständig durch die Körner des Puffers verschlossen, reißt der Förderluftstrom ab, sodass es zu keiner Nachförderung kommt. Erst wenn wieder Luftauslassöffnungen 15 freigegeben werden, kommt es zu einer namhaften Nachförderung von granularem Material.

Die Luftauslassöffnungen 15 münden in diesem Beispiel in einen Abluftsammelraum 16, welcher den Bereich umgibt, in dem die Luftauslassöffnungen 15 vorgesehen sind und welcher gegenüber der Umgebung abgeschlossen ist. Das Innere des Abluftsammelraums 16 ist jedoch über den Luftkanal 14 mit dem Inneren des Gehäuses 8 verbunden, sodass Luft aus dem Abluftsammelraum 16 in das Gehäuse 8 entweichen kann und von dort aus wiederum über den in der Fig. 3 nicht mehr gezeigten Schusskanal 9 in den Bereich des Säschars 10 gelangt.

In Fig. 3 ist auch ein Schneckenförderer angedeutet, welcher Teil der axialen Vordosierung 12 ist und granulares Material aus dem Sammelbehälter 7 in das Innere des Gehäuses 8 fördert. Dieser Schneckenförderer ist im Förderkanal angeordnet, über den granulares Material aus dem Sammelbehälter 7 in das Gehäuse 8 förderbar ist. Die Fördereinrichtung 17 selbst ist nur schematisch dargestellt.

Alternativ zur Ausführungsform der Fig. 3 könnte (nicht dargestellt) auch auf einen Abluftsammelraum verzichtet werden, indem die Luftauslassöffnungen des Sammelbehälters in einem Wandungsbereich vorgesehen sind, der unmittelbar an das Gehäuse angrenzt. Die Wandung des Gehäuses könnte in diesem Bereich entsprechende Öffnungen aufweisen, welche die Luftauslassöffnungen gewissermaßen in das Innere des Gehäuses hinein verlängern. Dadurch würden die Luftauslassöffnungen direkt in das Gehäuse münden und würden somit gleichzeitig Luftkanäle bilden, über die die Förderluft in das Gehäuse einleitbar ist. Auf einen zusätzlichen Luftkanal wie etwa Luftkanal 14 der Fig. 3 könnte also verzichtet werden.

Gemäß einer Weiterbildung dieser Alternative weisen der Sammelbehälter und das Gehäuse eine gemeinsame Wand auf, wobei in dieser gemeinsamen Wand die Luftauslassöffnungen angeordnet sind.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Dosiervorrichtung für granulares Material, insbesondere Saatgut, umfassend:
eine in einem Gehäuse (8) drehbar gelagerte Fördereinrichtung (17) zum Fördern von granularem Material von einem Aufnahmebereich in einen Abgabebereich, wobei im Abgabebereich eine Auslassöffnung angeordnet ist, über die ein durch die Fördereinrichtung (17) in den Abgabebereich gefördertes Korn des granularen Materials aus dem Gehäuse (8) ausgeschleust und an eine Abgabeeinrichtung weitergeleitet werden kann; und
ein mit dem Gehäuse (8) verbundener Sammelbehälter (7) für granulares Material, der pneumatisch mit granularem Material befüllbar ist, wobei granulares Material aus dem Sammelbehälter (7) über einen Förderkanal in das Gehäuse (8) förderbar ist;
**dadurch gekennzeichnet, dass**
die Dosiervorrichtung so ausgebildet ist, dass die zum Befüllen des Sammelbehälters (7) genutzte Förderluft wenigstens teilweise in das Gehäuse (8) einleitbar ist.

2. Dosiervorrichtung nach Anspruch 1, wobei zum Einleiten der Förderluft in das Gehäuse (8) wenigstens ein Luftkanal (14) vorgesehen ist, der getrennt von dem Förderkanal für das granulare Material ausgebildet ist.

3. Dosiervorrichtung nach einem der vorangegangenen Ansprüche, wobei in einer Wandung des Sammelbehälters (7) wenigstens eine Luftauslassöffnung (15) vorgesehen ist, die durch einen Puffer von granularem Material wenigsten teilweise blockierbar ist, und wobei die wenigstens eine Luftauslassöffnung (15) in das Gehäuse (8) oder in einen umgebenden Abluftsammelraum (16) mündet.

4. Dosiervorrichtung nach Anspruch 3, wobei der Abluftsammelraum (16) ein gegenüber der Umgebung abgeschlossener Bereich ist.

5. Dosiervorrichtung nach einem der vorangegangenen Ansprüche, wobei die Dosiervorrichtung über ein Nursingsystem oder über einen Verteilerkopf (6) mit granularem Material gespeist wird.

6. Nachfüllsystem für granulares Material umfassend:
einen zentralen Vorratsbehälter (1) zum Vorhalten des granularen Materials;
eine Dosiervorrichtung nach einem der vorangegangenen Ansprüche; und
einen pneumatischen Förderkanal (4) zum pneumatischen Fördern von granularem Material vom Vorratsbehälter (1) zur Dosiervorrichtung.

7. Sämaschine umfassend eine Dosiervorrichtung nach einem der Ansprüche 1 - 5.
